# EUROPEAN PATENT APPLICATION

(11) **EP 3 901 023 A1**
(43) Date of publication of application: **27.10.2021**
(21) Application number: 21179213.0
(22) Date of filing: 25.03.2014
(51) Int. Cl.: B62M 6/55, B62M 11/02

(54) **DRIVING UNIT AND ELECTRIC ASSIST BICYCLE**

(30) Priority: 29.03.2013 JP 2013073129
(62) Divisional of application: 14161383.6
(71) Applicant: Yamaha Hatsudoki Kabushiki Kaisha, Iwata-shi, Shizuoka 438-8501 (JP)
(72) Inventor: ISHIKAWA, Noriyasu, Iwata-shi, 438-8501 (JP); TOYOTA, Yuichi, Iwata-shi, 438-8501 (JP)
(74) Representative: Grünecker Patent- und Rechtsanwälte PartG mbB

(57) **Abstract**

A driving unit for use in an electric assist bicycle with reduced size as viewed in an axial direction of the crankshaft is provided. Out of a motor, first transmission gear and driven gear, a first component is the component with the largest diameter as viewed in an axial direction of the crankshaft, a second component is the component with the second largest diameter, and a third component is the component with the smallest diameter. One of the first and second components is the driven gear. As viewed in an axial direction of the crankshaft, at least part of the first component overlaps the second component. At least part of the third component overlaps the area where the first and second components overlap. A first line segment connecting the rotational center of the first component with the rotational center of the second component, a second line segment connecting the rotational center of the second component with the rotational center of the third component, and a third line segment connecting the rotational center of the third component with the rotational center of the first component form a triangle. The first line segment is longer than the second line segment and longer than the third line segment.

## Description

The present invention relates to a driving unit for use in an electric assist bicycle, and an electric assist bicycle including such a driving unit.

Recently, electric assist bicycles have been proposed that assist the rider by adding a driving force of a motor to the force of the rider for pedaling (hereinafter referred to as "tread force"). An electric assist bicycle includes a driving unit for assisting the rider by adding a force to his tread force. A driving unit is disclosed in JP 2008-114851 A, for example.

In the above publication, the driving unit includes a rotating member. The rotating member is rotatable on the same axis as that of the pedal crankshaft. The rotating member couples the human-power drive system with the motor drive system. A motor is located rearward of the rotating member with respect to the vehicle. The motor is coupled with the rotating member via a gear reducer.

According to the above publication, the motor, the rotating member (and thus the pedal crankshaft) and the gear reducer are arranged generally along one straight line. As such, it is difficult to reduce the size of the driving unit as viewed in an axial direction of the pedal crankshaft.

An object of the present invention is to provide a driving unit for use in an electric assist bicycle with reduced size as viewed in an axial direction of the crankshaft.

Another object of the present invention is to provide an electric assist bicycle including such a driving unit.

According to the present invention said object is solved by a driving unit for use in an electric assist bicycle having the features of independent claim 1. Preferred embodiments are laid down in the dependent claims.

The driving unit of the present teaching may be used in an electric assist bicycle, and includes a housing, a crankshaft, a motor and a transmission shaft.

The crankshaft is positioned to extend through the housing. The motor is located within the housing. The transmission shaft is located within the housing and extends parallel to a central axis of the crankshaft.

The motor includes a rotor, an output shaft and an output gear. The output shaft rotates together with the rotor and extends parallel to the central axis of the crankshaft. The output gear is located on the output shaft.

The driving unit further includes a first transmission gear, a second transmission gear and a driven gear. The first transmission gear is located on the transmission shaft and engages the output gear, and includes more cogs than the output gear does. The second transmission gear is located on the transmission shaft. The driven gear is located on the crankshaft and engages the second transmission gear, and includes more cogs than the second transmission gear does.

Out of the motor, first transmission gear and driven gear, a first component is a component with the largest diameter as viewed in an axial direction of the crankshaft, a second component is a component with the second largest diameter, and a third component is a component with the smallest diameter. Then, one of the first and second components is the driven gear.

As viewed in an axial direction of the crankshaft, at least part of the first component overlaps the second component. At least part of the third component overlaps an area where the first and second components overlap. A first line segment connecting a rotational center of the first component with a rotational center of the second component, a second line segment connecting a rotational center of the second component with a rotational center of the third component, and a third line segment connecting a rotational center of the third component with the rotational center of the first component form a triangle. The first line segment is longer than the second line segment and longer than the third line segment.

In the driving unit of the present teaching, the third component may be positioned closer to the first and second components as viewed in an axial direction of the crankshaft. As such, the third component may overlap the first and/or second component with a larger proportion as viewed in an axial direction of the crankshaft. This will reduce the size of the driving unit as viewed in an axial direction of the crankshaft.

### BRIEF DESCRIPTION OF THE DRAWINGS

[FIG. 1] FIG. 1 is a schematic right side view of an electric assist bicycle according to an embodiment of the present teaching.
[FIG. 2] FIG. 2 is a schematic vertical cross-sectional view of the driving unit.
[FIG. 3] FIG. 3 is a right side view of the driving unit with the second housing portion removed.
[FIG. 4] FIG. 4 is a cross-sectional view illustrating the positional relationship between the output shaft, rotor and bearings.
[FIG. 5] FIG. 5 is an enlarged vertical cross-sectional view of portions of components shown in FIG. 2.
[FIG. 6] FIG. 6 is a right side view of the driving unit illustrating the positional relationship between the rotational center of the crankshaft, the rotational center of the output shaft and the rotational center of the transmission shaft.
[FIG. 7] FIG. 7 is an enlarged vertical cross-sectional view of portions of components shown in FIG. 2.
[FIG. 8] FIG. 8 is a right side view of the driving unit illustrating the substrate.
[FIG. 9] FIG. 9 is a right side view of the driving unit illustrating the first region.
[FIG. 10] FIG. 10 is a vertical cross-sectional view illustrating the relationship between the first region and the second housing portion.
[FIG. 11] FIG. 11 is a right side view of the driving unit illustrating the second and third regions.
[FIG. 12] FIG. 12 is a perspective view of the partition.
[FIG. 13] FIG. 13 is a perspective view of the partition as viewed in a different direction than in FIG. 12.
[FIG. 14] FIG. 14 is a right side view of the driving unit of FIG. 3 with the driven gear removed.
[FIG. 15] FIG. 15 is a right side view of a driving unit according to an application example illustrating the positional relationship between the rotational center of the crankshaft, the rotational center of the output shaft and the rotational center of the transmission shaft.

### DESCRIPTION OF THE EMBODIMENTS

Now, the driving units and electric assist bicycles of embodiments of the present teaching will be described with reference to the drawings. The same or corresponding components are labeled with the same characters throughout the drawings, and their description will not be repeated. The sizes of the components in the drawings do not exactly represent the sizes and size ratios of the actual components. In the following description, front/forward, rear/rearward, left and right are directions as perceived by the rider sitting on the saddle 18 and grasping the handlebars 16.

### [Overall Configuration of Electric Assist Bicycle]

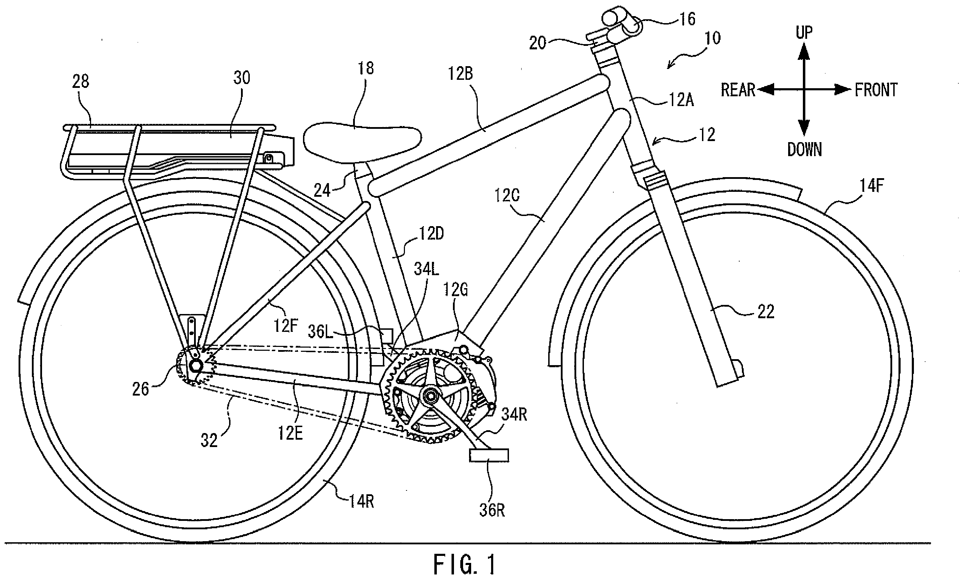

An electric assist bicycle 10 according to an embodiment of the present teaching will be described with reference to FIG. 1. FIG. 1 is a schematic right side view of the electric assist bicycle 10.

The electric assist bicycle 10 includes a body frame 12, a front wheel 14F, a rear wheel 14R, handlebars 16, a saddle 18 and a driving unit 50.

The body frame 12 includes a head pipe 12A, a main frame 12B, a down frame 12C, a seat frame 12D, a pair of chain stays 12E, a pair of seat stays 12F, and a bracket 12G.

The head pipe 12A is located in a front portion of the electric assist bicycle 10, and extends in a top-to-bottom direction. A stem 20 is rotatably inserted through the head pipe 12A. The handlebars 16 are fixed to the top end of the stem 20. A front fork 22 is fixed to the bottom end of the stem 20. The front wheel 14F is rotatably attached to the bottom end of the front fork 22.

The main frame 12B is located rearward of the head pipe 12A, and extends in a front-to-rear direction. The front end of the main frame 12B is connected with the top end of the head pipe 12A. The rear end of the main frame 12B is connected with the top end of the seat frame 12D, which extends in a top-to-bottom direction.

The down frame 12C is located rearward of the head pipe 12A, and extends in a front-to-rear direction. The down frame 12C is located below of the main frame 12B. The front end of the down frame 12C is connected with the head pipe 12A. The rear end of the down frame 12C is connected with the bottom end of the seat frame 12D.

A seat pipe 24 is inserted through the seat frame 12D. The saddle 18 is attached to the top end of the seat pipe 24.

The chain stays 12E extend in a front-to-rear direction. The rear wheel 14R is located between the chain stays 12E. The front end of each chain stay 12E is connected with the bottom end of the seat frame 12D. The rear wheel 14R is rotatably attached to the rear ends of the chain stays 12E. A driven sprocket 26 is located to the right of the rear wheel 14R. The driven sprocket 26 is coupled with the rear wheel 14R via a one-way clutch, not shown.

The seat stays 12F extend in a front-to-rear direction. The front end of each of the seat stays 12F is connected with the top end of the seat frame 12D. The rear end of the seat stay 12F located to the right of the rear wheel 14R is connected with the rear end of the chain stay12E located to the right of the rear wheel 14R. The rear end of the seat stay 12F located to the left of the rear wheel 14R is connected with the rear end of the chain stay 12E located to the left of the rear wheel 14R.

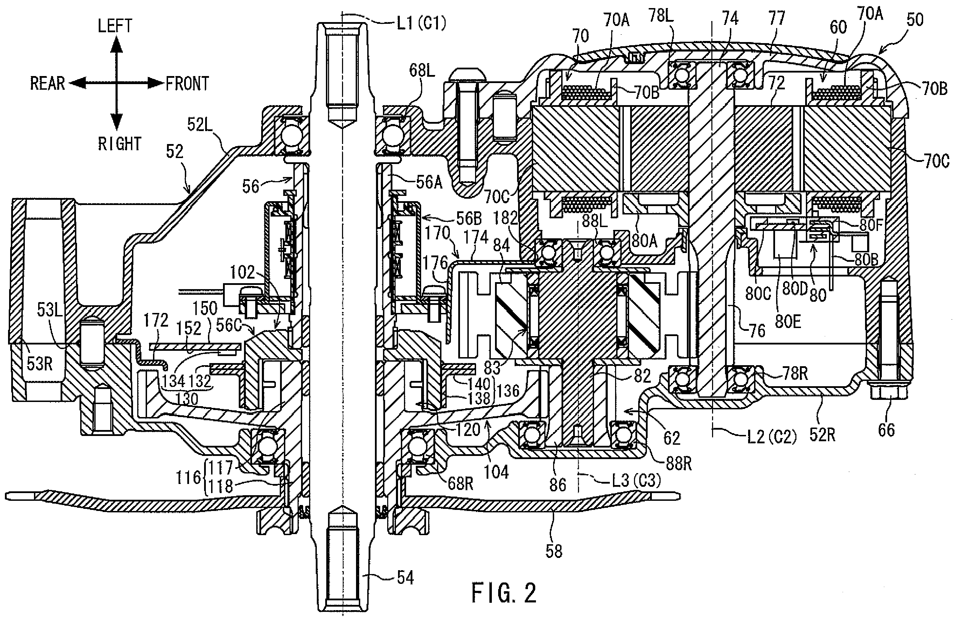

The carrier 28 is located rearward of the saddle 18. The carrier 28 is attached to the seat stays 12F. A battery unit 30 is located on the carrier 28. The battery unit 30 supplies the motor 60 of the driving unit 50 (see FIG. 2) with electric power. The battery unit 30 includes a battery and a controller. The battery is a rechargeable battery that can be charged and discharged. The controller controls the charging and discharging of the battery and monitors the output current and remaining level of the battery.

The bracket 12G covers the rear end of the down frame 12C, the bottom end of the seat frame 12D and the front ends of the chain stays 12E. The driving unit 50 is fixed to the bracket 12G by a plurality of fasteners (not shown). The driving unit 50 will be described in more detail below.

An endless chain 32 is wound around the driving sprocket 58 and driven sprocket 26 attached to the driving unit 50.

The driving unit 50 includes a crankshaft 54, and one end of a crankarm 34R is attached to one of the ends of the crankshaft disposed along its axis, while one end of a crankarm 34L is attached to the other end of the crankshaft. A pedal 36R is attached to the other end of the crankarm 34R, while a pedal 36L is attached to the other end of the crankarm 34L.

### [Driving Unit]

The driving unit 50 will be described with reference to FIG. 2. FIG. 2 is a schematic vertical cross-sectional view of the driving unit 50.

The driving unit 50 includes a housing 52, crankshaft 54, rotating member 56, motor 60 and speed reduction mechanism 62.

### [Housing]

The housing 52 includes a first housing portion 52L and a second housing portion 52R. The first and second housing portions 52L and 52R are each made of a metal material. The metal material may be an aluminum alloy, for example. The first and second housing portions 52L and 52R are joined together from the left and right and fixed to each other by a plurality of fasteners 66. The housing 52 is attached to the bracket 12G by a plurality of fasteners (not shown).

The housing 52 will be described in more detail. The first housing portion 52A has an overlay surface 53A. The second housing portion 52B has an overlay surface 53B. The overlay surfaces 53A and 53B are perpendicular to the axis of the crankshaft 54. When the first and second housing portions 52A and 52B are joined together, the overlay surfaces 53A and 53B are overlaid on each other. That is, the first and second housing portions 52A and 52B are overlaid so as to be arranged in an axial direction of the crankshaft 54.

### [Crankshaft]

The crankshaft 54 is positioned to extend through the housing 52 in a left-to-right direction. In other words, the central axis L1 of the crankshaft 54 extends in a left-to-right direction. The central axis L1 coincides with the rotational center C1 of the crankshaft 54 when viewed in an axial direction of the crankshaft 54.

The crankshaft 54 is supported by two bearings 68L and 68R and is rotatable about the central axis L1 of the crankshaft 54. The bearing 68L is located closer to one of the ends of the crankshaft 54 disposed along its axis than to the rotating member 56 (i.e. to the left), and is fixed to the first housing portion 52L. The bearing 68R is located closer to the other one of the ends of the crankshaft 54 disposed along its axis than to the bearing 68L (i.e. to the right), and is fixed to the second housing portion 52R.

The crankshaft 54 is positioned to extend through the rotating member 56. A driving sprocket 58 is located outside the housing 52 and to the right of the housing 52, and rotates together with the rotating member 56. The rotating member 56 will be described in more detail below.

### [Motor]

The motor 60 is located inside the housing 52. The motor 60 generates a driving force for assisting the rider in riding the electric assist bicycle 10 based on control signals supplied by a control device, not shown. The motor 60 includes a stator 70, rotor 72, output shaft 74 and output gear 76.

The stator 70 includes a plurality of bobbins 70B (in the present embodiment, 14 bobbins), around each of which a coil 70A is wound. An iron core 70C is inserted through each of the bobbins 70B. The stator 70 is fixed to the first housing portion 52L. A cover 77 for covering the left side of the motor 60 is attached to the first housing portion 52L.

The rotor 72 is located inside the stator 70. The rotor 72 is a permanent magnet having alternating north and south magnetic poles along its circumference. In the present embodiment, seven north poles and seven south poles are provided.

The output shaft 74 is positioned to extend through the rotor 72 and is fixed to the rotor 72. That is, the output shaft 74 rotates together with the rotor 72.

The output shaft 74 is made of a metal material. The metal material may be iron, for example.

The central axis L2 of the output shaft 74 is parallel to the central axis L1 of the crankshaft 54. In other words, the output shaft 74 extends parallel to the central axis L1 of the crankshaft 54. The central axis L2 coincides with the axis of the output shaft 74, i.e. the rotational center C2 of the output shaft 74 when viewed in an axial direction of the crankshaft 54.

The output shaft 74 is supported by two bearings 78L and 78R and is rotatable around the central axis L2. In other words, the output shaft 74 is supported by a pair of bearings 78L and 78R and is rotatable around the central axis L2. The bearing 78L is located closer to one of the ends of the output shaft disposed along its axis than to the rotor 72 (i.e. to the left), and is fixed to the cover 77. The bearing 78R is located closer to the other one of the ends of the output shaft disposed along its axis than to the rotor 72 (i.e. to the right), and is fixed to the second housing portion 52R.

The bearing 78L is located at a different position than the bearing 68L as measured in an axial direction of the crankshaft 54. "The bearing 78L is located at a different position than the bearing 68L as measured in an axial direction of the crankshaft 54" means that the bearing 78L does not overlap the bearing 68L when viewed in any direction perpendicular to the central axis L1 of the crankshaft 54. The bearing 78L is located more distant from the bearing 68R than from the bearing 68L as measured in an axial direction of the crankshaft 54.

The bearing 78R is located at a different position than the bearing 68R as measured in an axial direction of the crankshaft 54. "The bearing 78R is located at a different position than the bearing 68R as measured in an axial direction of the crankshaft 54" means that the bearing 78R does not overlap the bearing 68R when viewed in any direction perpendicular to the central axis L1 of the crankshaft 54. The bearing 78R is located between the bearings 68L and 68R as measured in an axial direction of the crankshaft 54. The bearing 78R is located closer to the bearing 68R than to the bearing 68L as measured in an axial direction of the crankshaft 54.

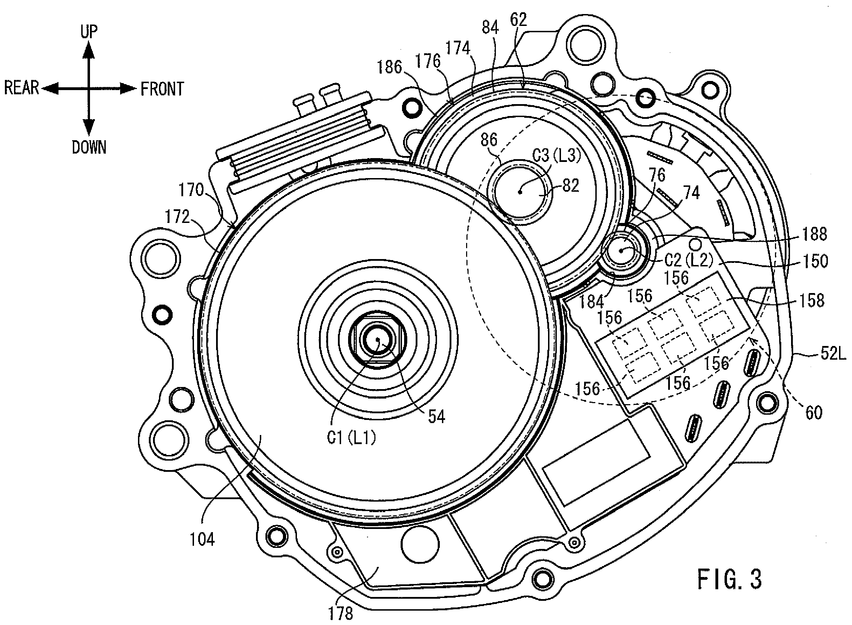

The rotational center C2 of the output shaft 74 will be described with reference to FIGS. 2 and 3. FIG. 3 is a right side view of the driving unit 50 with the second housing portion 52R removed.

The rotational center C2 is located forward of the rotational center C1 of the crankshaft 54. The rotational center C2 is located higher than the rotational center C1 (see FIG. 3).

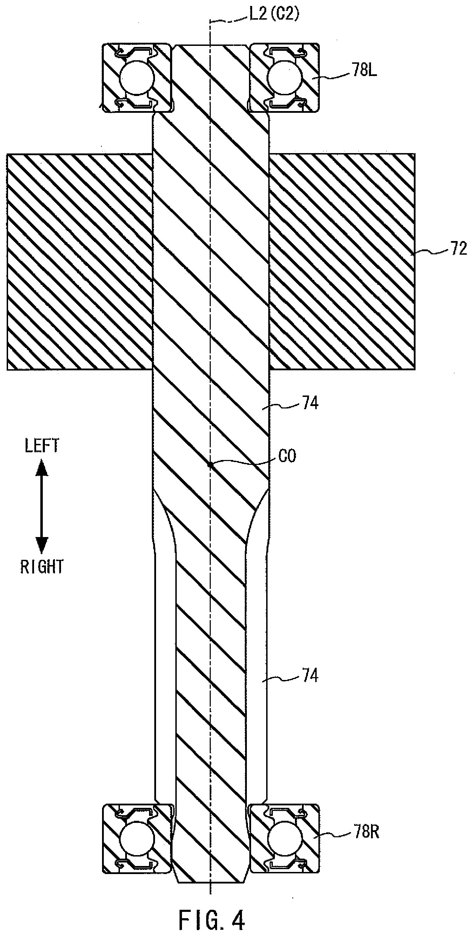

The output gear 76 will be described with reference to FIG. 4. FIG. 4 is a vertical cross-sectional view illustrating the positional relationship between the output shaft 74, rotor 72 and bearings 78L and 78R.

The output gear 76 is formed on the output shaft 74, located closer to the other one of the ends of the output shaft disposed along its axis than to the rotor 72 (i.e. to the right). That is, the output gear 76 is made of a metal material and is located on the output shaft 74.

As shown in FIG. 4, the output gear 76 is located closer to the bearing 78R than to the center C0 of the axial length of the output shaft 74. The center C0 is located closer to the bearing 78R than to the rotor 72. The bearing 78R is located more distant from the rotor 72 than from the output gear 76 as measured in an axial direction of the output shaft 74. In other words, the bearing 78R is located adjacent the end of the output gear 76 opposite the end thereof adjacent the rotor 72 as measured in an axial direction of the output shaft 74.

### [Electric Component]

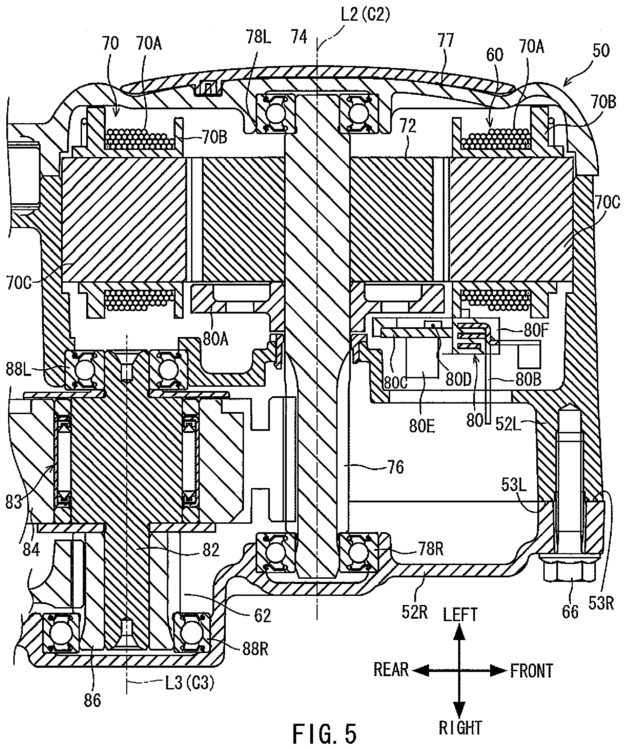

The electric component 80 will be described with reference to FIGS. 2 and 5. FIG. 5 is an enlarged vertical cross-sectional view of portions of components shown in FIG. 2.

The electric component 80 is disposed around the output shaft 74. The electric component 80 is used to drive i.e. control the motor 60. At least some portions of the electric component 80 overlap the motor 60 when viewed in an axial direction of the crankshaft 54. The electric component 80 includes a detected portion 80A, a plurality of bus bars 80B, a substrate 80C, a detecting element 80D and a connector 80E.

The detected portion 80A is located between the rotor 72 and output gear 76 as measured in an axial direction of the output shaft 74. The detected portion 80A has the shape of a ring. The output shaft 74 is inserted through the detected portion 80A. The detected portion 80A is positioned to be concentric with the output shaft 74. The detected portion 80A is fixed to the output shaft 74. That is, the detected portion 80A rotates together with the output shaft 74. The detected portion 80A is located inward of the stator 70 when viewed in an axial direction of the output shaft 74.

The bus bars 80B are embedded in a support 80F, made of an insulating material (for example, a synthetic resin). The substrate 80C is supported by the support 80F. The support 80F is attached to the bobbins 70B. In this state, the detecting element 80D on the substrate 80C is positioned to face the detected portion 80A such that the detecting element and detected portion are arranged in an axial direction of the output shaft 74. The detecting element 80D detects rotation of the detected portion 80A by detecting changes in the magnetic field caused by the rotation of the detected portion 80A. Depending on the detected changes, the control device (not shown) controls the rotation of the rotor 72. Wires (not shown) connecting the substrate 80C with the control device are connected with the connector 80E on the substrate 80C.

### [Speed Reduction Mechanism]

The speed reduction mechanism 62 will be described with reference to FIGS. 2 and 5. The speed reduction mechanism 62 includes a transmission shaft 82, first transmission gear 84 and second transmission gear 86.

The transmission shaft 82 is located within the housing 52. The central axis L3 of the transmission shaft 82 is parallel to the central axis L1 of the crankshaft 54. In other words, the transmission shaft 82 extends parallel to the central axis L1 of the crankshaft 54. The central axis L3 coincides with the axis of the transmission shaft 82, i.e. the rotational center C3 of the transmission shaft 82 when viewed in an axial direction of the crankshaft 54.

The transmission shaft 82 is supported by two bearings 88L and 88R and is rotatable around the central axis L3. The bearing 88L is fixed to the first housing portion 52L. The bearing 88R is fixed to the second housing portion 52R.

At least part of the bearing 88L overlaps the stator 70 when viewed in an axial direction of the crankshaft 54. The rotational center C3 of the transmission shaft 82 overlaps the stator 70 when viewed in an axial direction of the crankshaft 54. In other words, the rotational center C3 of the transmission shaft 82 overlaps the motor 60 when viewed in an axial direction of the crankshaft 54 (see FIG. 3).

The bearing 88L is located at the same position as the electric component 80 as measured in an axial direction of the crankshaft 54. "The bearing 88L is located at the same position as the electric component 80 as measured in an axial direction of the crankshaft 54" means that at least part of the bearing 88L overlaps the electric component 80 when viewed in a direction perpendicular to the central axis L1 of the crankshaft 54.

The electric component 80 is not located between the bearing 88L and motor 60 along a line extending in an axial direction of the crankshaft 54. The bearing 88L and electric component 80 are located at different positions along the circumference around the central axis L2 of the output shaft 74. In other words, at least part of the bearing 88L and at least part of the electric component 80 overlap the motor 60 in different areas as viewed in an axial direction of the crankshaft 54.

The bearing 88L is located at a different position than the bearing 78L as measured in an axial direction of the crankshaft 54. "The bearing 88L is located at a different position than the bearing 78L as measured in an axial direction of the crankshaft 54" means that the bearing 88L does not overlap the bearing 78L when viewed in any direction perpendicular to the central axis L1 of the crankshaft 54. The bearing 88L is located closer to the bearing 78R than to the bearing 78L as measured in an axial direction of the crankshaft 54.

The bearing 88R is located at a different position than the bearing 78R as measured in an axial direction of the crankshaft 54. "The bearing 88R is located at a different position than the bearing 78R as measured in an axial direction of the crankshaft 54" means that the bearing 88R does not overlap the bearing 78R when viewed in any direction perpendicular to the central axis L1 of the crankshaft 54. The bearing 88R is located more distant from the bearing 78L than from the bearing 78R as measured in an axial direction of the crankshaft 54.

As shown in FIG. 2, the bearing 88L is located at a different position than the bearing 68L as measured in an axial direction of the crankshaft 54. "The bearing 88L is located at a different position than the bearing 68L as measured in an axial direction of the crankshaft 54" means that the bearing 88L does not overlap the bearing 68L when viewed in any direction perpendicular to the central axis L1 of the crankshaft 54. The bearing 88L is located between the bearings 68L and 68R as measured in an axial direction of the crankshaft 54. The bearing 88L is located closer to the bearing 68L than to the bearing 68R as measured in an axial direction of the crankshaft 54.

As shown in FIG. 2, the bearing 88R is located at the same position as the bearing 68R as measured in an axial direction of the crankshaft 54. "The bearing 88R is located at the same position as the bearing 68R as measured in an axial direction of the crankshaft 54" means that at least part of the bearing 88R overlaps the bearing 68R when viewed in a direction perpendicular to the central axis L1 of the crankshaft 54.

As shown in FIGS. 2 and 3, the rotational center C3 of the transmission shaft 82 is located forward of the rotational center C1 of the crankshaft 54, and located rearward of the rotational center C2 of the output shaft 74. As shown in FIG. 3, the rotational center C3 is located higher than the rotational center C1, and is located higher than the rotational center C2.

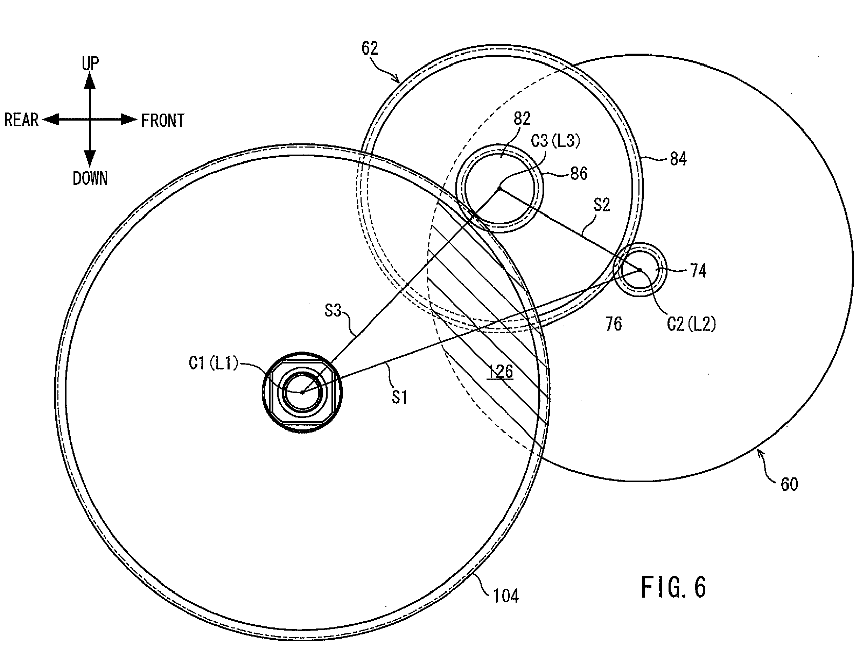

That is, as shown in FIG. 6, the first line segment S1 connecting the rotational center C1 with the rotational center C2, the second line segment S2 connecting the rotational center C2 with the rotational center C3, and the third line segment S3 connecting the rotational center C3 with the rotational center C1 form a triangle. The first line segment S1 is longer than the second line segment S2 and longer than the third line segment S3.

Returning to FIGS. 2 and 5, the first transmission gear 84 is made of a synthetic resin. The first transmission gear 84 is located on the transmission shaft 82. The first transmission gear 84 is located closer to the bearing 88R than to the bearing 88L as measured in an axial direction of the transmission shaft 82. The first transmission gear 84 engages the output gear 76. As such, the driving force generated by the motor 60 is transferred to the first transmission gear 84 via the output gear 76. A one-way clutch 83 is provided between the first transmission gear 84 and the transmission shaft 82. As such, when the output gear 76 rotates forward (i.e. in the correct direction), the transmission shaft 82 rotates rearward; when the output gear 76 rotates rearward (i.e. in the wrong direction), the transmission shaft 82 does not rotate. The first transmission gear 84 has a larger diameter than the output gear 76 and has more cogs than the output gear 76 does. That is, the first transmission gear 84 is rotated at a reduced speed compared with the output gear 76.

The second transmission gear 86 is made of a metal material. The metal material may be iron, for example. The second transmission gear 86 is located on the transmission shaft 82. The second transmission gear 86 is located at a different position than the first transmission gear 84 as measured in an axial direction of the transmission shaft 82. The second transmission gear 86 is fixed to the transmission shaft 82 by spline fitting. That is, the second transmission gear 86 rotates together with the transmission shaft 82. The second transmission gear 86 is supported by the bearing 88R and is rotatable around the central axis L3 of the transmission shaft 82. That is, the second transmission gear 86 is located more distant from the bearing 88L than from the first transmission gear 84.

The second transmission gear 86 is located at the same position as the bearing 78R as measured in an axial direction of the crankshaft 54. "The second transmission gear 86 is located at the same position as the bearing 78R as measured in an axial direction of the crankshaft 54" means that at least part of the second transmission gear 86 overlaps the bearing 78R when viewed in a direction perpendicular to the central axis L1 of the crankshaft 54.

As shown in FIG. 6, the second transmission gear 86 does not overlap the first line segment S1 when viewed in an axial direction of the crankshaft 54.

### [Rotating Member]

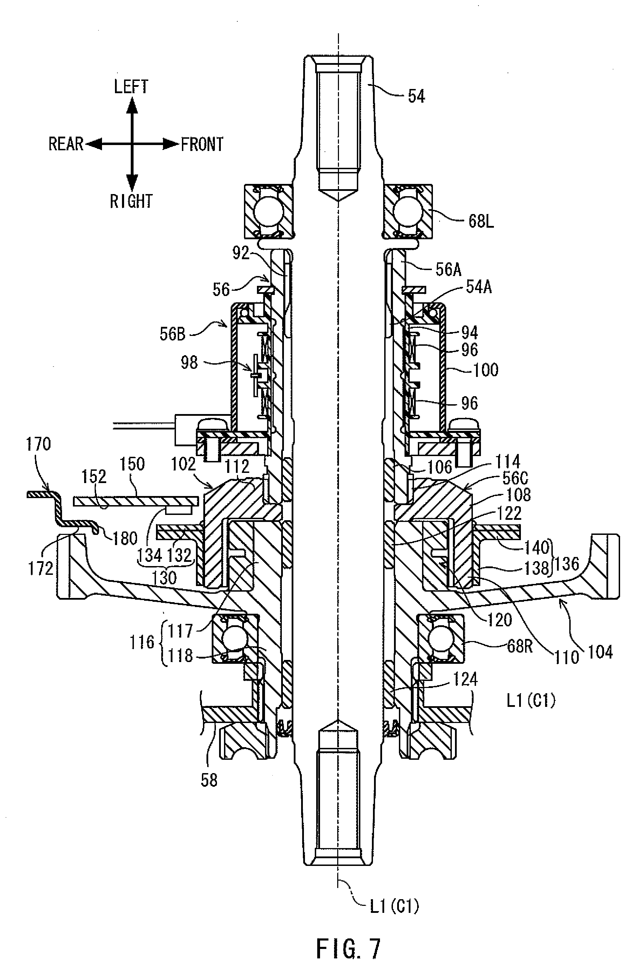

The rotating member 56 will be described with reference to FIG. 7. FIG. 7 is an enlarged vertical cross-sectional view of portions of components shown in FIG. 2.

The rotating member 56 is positioned to be concentric with the crankshaft 54 and rotates together with the crankshaft 54. The rotating member 56 includes a connecting shaft 56A, torque detection device 56B and one-way clutch 56C.

The connecting shaft 56A is located at one of the ends of the rotating member 56 disposed along its axis (i.e. to the left), and is located within the housing 52 (see FIG. 2). The connecting shaft 56A has the shape of a circular cylinder. The crankshaft 54 is inserted through the connecting shaft 56A. The connecting shaft 56A is positioned to be concentric with the crankshaft 54.

Serrations 92 are formed on the inner peripheral surface of the connecting shaft 56A at one of the ends thereof disposed along its axis. The serrations 92 engage serrations 54A formed on the outer peripheral surface of the crankshaft 54. Thus, the connecting shaft 56A is coupled with the crankshaft 54. As such, the connecting shaft 56A rotates together with the crankshaft 54 regardless of whether the crankshaft 54 rotates forward or rearward. A slide bearing 106 is located between the other one of the ends of the connecting shaft 56A disposed along its axis and the crankshaft 54.

The torque detection device 56B is located inside the housing 52 (see FIG. 2). The torque detection device 56B is capable of detecting the torque generated in the crankshaft 54 when the rider operates the pedals 36R and 36L (see FIG. 1). The torque detection device 56B is a magnetostrictive torque sensor.

The torque detection device 56B includes an attachment shaft 94, a coil 96, a detecting element 98 and a shield 100. The attachment shaft 94 is attached to the outer peripheral surface of the connecting shaft 56A and rotates relative to the connecting shaft 56A. In other words, the attachment shaft 94 does not rotate together with the connecting shaft 56A. The coil 96 is located on the outer peripheral surface of the attachment shaft 94. The detecting element 98 detects the torque generated in the crankshaft 54 by detecting changes in the voltage across the coil 96 caused by distortions of the connecting shaft 56A. The detecting element 98 informs a control device (not shown) of the detected torque. The control device refers to the torque informed of by the detecting element 98 to monitor the pedaling by the rider and control the motor 60. The shield 100 prevents the detection precision of the detecting element 98 from being decreased by external magnetic fields. The shield 100 engages an engagement piece (not shown) formed on the first housing portion 52L. That is, the shield 100 does not rotate together with the connecting shaft 56A.

The one-way clutch 56C is located closer to the driving sprocket 58 than to the torque detection device 56B, and is positioned to be concentric with the crankshaft 54. The one-way clutch 56C allows a rotational force that causes forward rotation of the crankshaft 54 to be transferred to the driving sprocket 58, while it prevents a rotational force that causes rearward rotation of the crankshaft 54 from being transferred to the driving sprocket 58.

The one-way clutch 56C includes a driving member 102 and a driven gear 104. The driving member 102 includes a body 108 and a cylindrical portion 110.

The body 108 has the shape of a ring. The crankshaft 54 is inserted through the body 108. The body 108 is positioned to be concentric with the crankshaft 54.

Serrations 112 are formed on the inner peripheral surface of the body 108. The serrations 112 engage serrations 114 formed on the outer peripheral surface of the connecting shaft 56A at the other one of the ends thereof disposed along its axis. Thus, the body 108, i.e. the driving member 102 is coupled with the connecting shaft 56A. As such, the body 108, i.e. the driving member 102 rotates together with the connecting shaft 56A regardless of whether the connecting shaft 56A rotates forward or rearward. In other words, the driving member 102 rotates together with the crankshaft 54 regardless of whether the crankshaft 54 rotates forward or rearward.

The cylindrical portion 110 is located closer to the driving sprocket 58 than to the body 10, and is positioned to be concentric with the body 108. The cylindrical portion 110 has the shape of a circular cylinder and is positioned to be concentric with the crankshaft 54. The cylindrical portion 110 is integrally formed with the body 108.

The driven gear 104 includes a shaft portion 116. The shaft portion 116 has the shape of a circular cylinder. The crankshaft 54 is inserted through the shaft portion 116. The shaft portion 116 is positioned to be concentric with the crankshaft 54 and is positioned to be concentric with the driving member 102. That is, the driven gear 104 is located to be concentric with the crankshaft 54 and concentric with the driving member 102.

Slide bearings 122 and 124 are located between the shaft portion 116 and crankshaft 54. Thus, the driven gear 104 is rotatable relative to the crankshaft 54.

The shaft portion 116 includes a driven shaft 117 and an attachment shaft 118. The driven shaft 117 is located closer to the driving member 102 than to the attachment shaft 118, and is positioned to be concentric with the attachment shaft 118. The driven shaft 117 is formed integrally with the attachment shaft 118.

The driven shaft 117 is located inward of the cylindrical portion 110 as measured in a direction perpendicular to the central axis L1 of the crankshaft 54. A latchet mechanism 120 is located between the driven shaft 117 and cylindrical portion 110. As such, the forward rotational force of the driving member 102 can be transferred to the driven shaft 117 i.e. driven gear 104, while the rearward rotational force of the driving member 102 cannot be transferred to the driven shaft 117 i.e. driven gear 104.

The attachment shaft 118 is supported by the second bearing 68R and is rotatable around the central axis of the crankshaft 54. The attachment shaft 118 has portions located adjacent the side of the second bearing 68R opposite the side thereof adjacent the driving member 102. The driving sprocket 58 is attached to these portions (see FIG. 2).

That is, the one-way clutch 56C allows a rotational force that is to cause forward rotation of the driving sprocket 58 about the central axis L1 of the crankshaft 54 to be transferred to the driving sprocket 58, while it prevents a rotational force that is to cause rearward rotation of the driving sprocket 58 from being transferred to the driving sprocket 58.

The driven gear 104 engages the second transmission gear 86. The driven gear 104 has a larger diameter than the second transmission gear 86, and has more cogs than the second transmission gear 86 does. That is, the driven gear 104 is rotated at a reduced speed than the second transmission gear 86.

The driven gear 104 is located at the same position as the bearing 78R as measured in an axial direction of the crankshaft 54. "The driven gear 104 is located at the same position as the bearing 78R as measured in an axial direction of the crankshaft 54" means that at least part of the driven gear 104 overlaps the bearing 78R when viewed in a direction perpendicular to the central axis L1 of the crankshaft 54.

The driven gear 104 is made of a metal material. The metal material may be iron, for example.

The relationship between the driven gear 104, motor 60 and first transmission gear 84 will be described with reference to FIG. 6.

When viewed in an axial direction of the crankshaft 54, the driven gear 104 has a larger diameter than the motor 60 and has a larger diameter than the first transmission gear 84. The motor 60 has a larger diameter than the first transmission gear 84. In other words, out of the motor 60, first transmission gear 84 and driven gear 104, the component with the largest diameter as viewed in an axial direction of the crankshaft 54 (i.e. the first component) is the driven gear 104. The component with the second largest diameter (i.e. the second component) is the motor 60. The component with the smallest diameter (i.e. the third component) is the first transmission gear 84.

At least part of the driven gear 104 overlaps the motor 60 when viewed in an axial direction of the crankshaft 54. At least part of the first transmission gear 84 overlaps the area 126 where the driven gear 104 and motor 60 overlap when viewed in an axial direction of the crankshaft 54. In other words, at least part of the first transmission gear 84 overlaps both the driven gear 104 and motor 60 when viewed in an axial direction of the crankshaft 54.

### [Rotation Detection Device]

The rotation detection device 130 will be described with reference to FIG. 7. The rotation detection device 130 is located inside the housing 52 and detects rotation of the crankshaft 54. The rotation detection device 130 includes a ring magnet 132 that serves as a detected portion, and a detecting element 134 for detecting rotation of the ring magnet 132.

The ring magnet 132 has the shape of a circular ring plate. One of the sides of the ring magnet 132 disposed in an axial direction thereof forms magnetic poles. More specifically, one of the sides of the ring magnet 132 disposed in an axial direction thereof has alternating north and south poles around the central axis L1 of the crankshaft 54.

The ring magnet 132 is attached to the support member 136. The support member 136 includes a cylindrical portion 138 and a circular ring portion 140.

The cylindrical portion 138 extends in an axial direction of the crankshaft 54. The cylindrical portion 138 is fixed to the outer peripheral surface of the cylindrical portion 110. The cylindrical portion 138 may be fixed to the outer peripheral surface of the cylindrical portion 110 by press fitting or bonding, for example.

The circular ring portion 140 is located at one of the ends of the cylindrical portion 138 disposed in an axial direction thereof and is positioned to be concentric with the cylindrical portion 138. The circular ring portion 140 is formed integrally with the cylindrical portion 138. The circular ring portion 140 includes an attachment surface 136A. The attachment surface 136A is one of the sides of the circular ring portion 140 disposed in an axial direction thereof and is an annular surface expanding in directions perpendicular to the central axis L1 of the crankshaft 54.

The ring magnet 132 is overlaid on the circular ring portion 140 such that the magnet and ring portion are arranged in an axial direction of the crankshaft 54. Then, one of the sides of the ring magnet 132 disposed in an axial direction thereof is bonded to the attachment surface 136A.

As discussed above, the cylindrical portion 138 is fixed to the outer peripheral surface of the cylindrical portion 110. That is, the ring magnet 132 rotates together with the rotating member 56.

The detecting element 134 is positioned to face the side of the ring magnet 132 that forms magnetic poles such that the detecting element and ring magnet are arranged in an axial direction of the crankshaft 54. The detecting element 134 detects that the ring magnet 132 rotates together with the rotating member 56. In the present embodiment, the detecting element 134 detects changes in the magnetic field occurring as the ring magnet 132 rotates together with the rotating member 56. That is, in the present embodiment, the rotation detection device 130 is a magnetic rotation detection sensor.

The ring magnet 132 is provided on the driving member 102 of the rotating member 56, which rotates together with the crankshaft 54. As such, rotation of the crankshaft 54 may be detected by detecting changes in the magnetic field caused by the rotation of the ring magnet 132. The detecting element 134 informs the control device (not shown) of the detected rotation of the crankshaft 54. The control device refers to the rotation of the crankshaft 54 detected by the detecting element 134, in addition to the torque detected by the detecting element 98, to monitor the pedaling by the rider and control the motor 60A.

The detecting element 134 is a one-chip hall IC that includes two detecting subelements. Thus, it is possible to detect transverse and longitudinal fields of the ring magnet 132. As such, it is possible to determine whether the ring magnet 132 is rotating forward or rearward.

### [Substrate]

The detecting element 134 is provided on a substrate 150. The substrate 150 is a printed circuit board. As shown in FIG. 3, the substrate 150 is located within the housing 52. The control device (not shown) for controlling the operation of the driving unit 50 is mounted on the substrate 150. The substrate 150 is coated with a waterproof coating material.

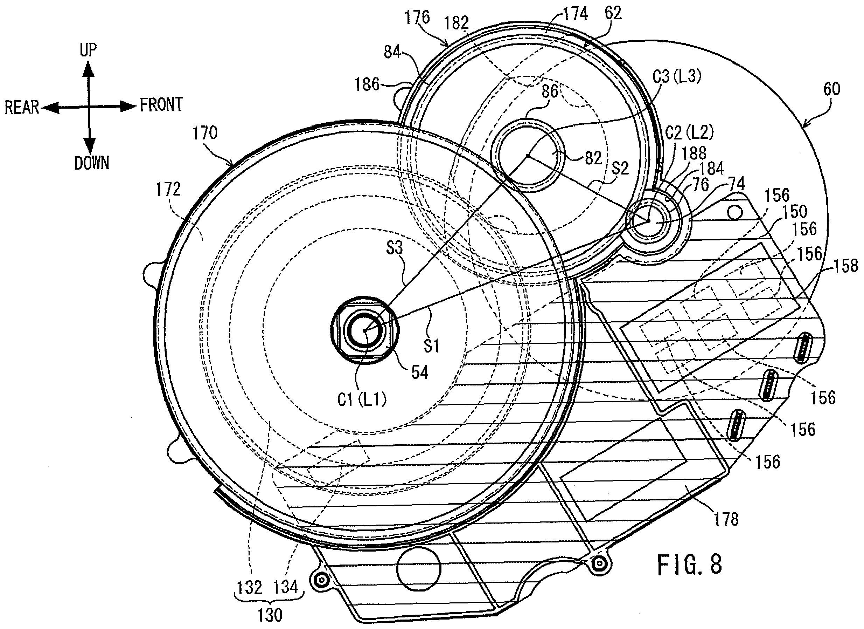

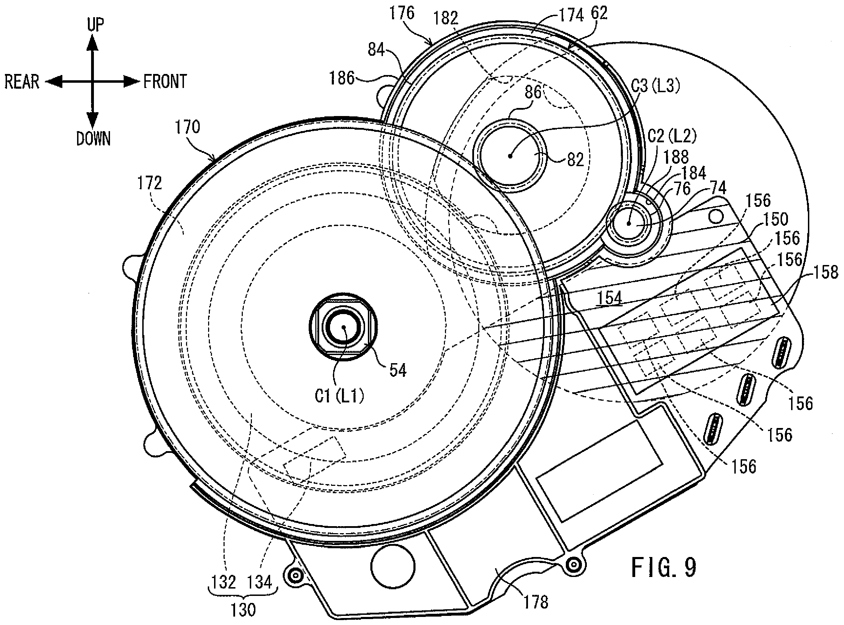

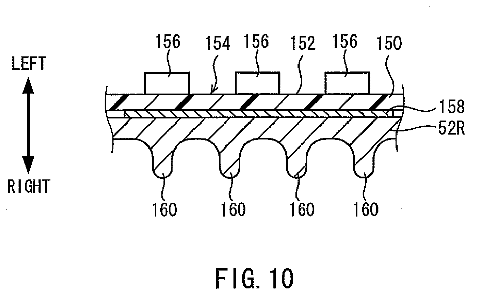

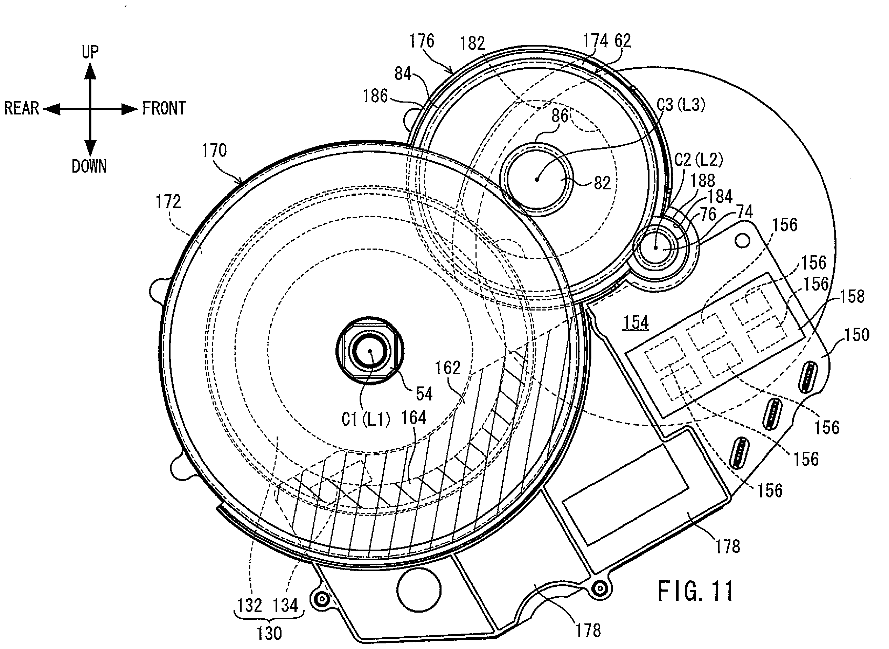

The substrate 150 will be described with reference to FIGS. 2 and 8 to 11. FIG. 8 is a right side view of the driving unit illustrating the substrate 150. The hatched portion in FIG. 8 represents the substrate 150. FIG. 9 is a right side view of the driving unit illustrating a first region 154. The hatched portion in FIG. 9 represents the first region 154. FIG. 10 is a vertical cross-sectional view illustrating the relationship between the first region 154 and the second housing portion 52R. FIG. 11 is a right side view of the driving unit illustrating second and third regions 162 and 164. The different hatched portions in FIG. 11 represent the second and third regions 162 and 164.

As shown in FIG. 2, the substrate 150 includes a mounting surface 152. The mounting surface 152 is one of the sides of the substrate 150 disposed in a thickness direction thereof. Various electric components for controlling the operation of the driving unit 50 are mounted on the mounting surface 152. The mounting surface 152 expands in directions perpendicular to the central axis L1 of the crankshaft 54.

As shown in FIG. 2, the substrate 150 is located between the driven gear 104 and the motor 60 as measured in an axial direction of the crankshaft 54. "The substrate 150 is located between the driven gear 104 and the motor 60" means that the substrate 150 is located between the stator 70, which has the largest diameter as viewed in an axial direction of the crankshaft 54 among the components of the motor 60, and the driven gear 104.

As shown in FIG. 2, the substrate 150 is disposed along the overlay surfaces 53L and 53R of the first and second housing portions 52L and 52R. "The substrate 150 is disposed along the overlay surfaces 53L and 53R" means that one of the sides of the substrate 150 disposed in a thickness direction thereof coincides with the overlay surfaces 53L and 53R as measured in an axial direction of the crankshaft 54.

The one of the sides of the substrate 150 disposed in a thickness direction thereof need not exactly coincide with the overlay surfaces 53L and 53R as measured in an axial direction of the crankshaft 54. For example, the overlay surfaces 53L and 53R may be located at the same position as the substrate 150 as measured in an axial direction of the crankshaft 54. "The overlay surfaces 53L and 53R may be located at the same position as the substrate 150 as measured in an axial direction of the crankshaft 54" means that the overlay surfaces 53L and 53R overlap the substrate 150 when viewed in a direction perpendicular to the central axis L1 of the crankshaft.

As shown in FIG. 2, the substrate 150 is located at the same position as the first transmission gear 84 as measured in an axial direction of the crankshaft 54. "The substrate 150 is located at the same position as the first transmission gear 84 as measured in an axial direction of the crankshaft 54" means that the substrate 150 overlaps the first transmission gear 84 when viewed in a direction perpendicular to the central axis L1 of the crankshaft 54.

As shown in FIG. 8, the substrate 150 is located on the side of the first line segment S1 opposite that with the rotational center C3 when viewed in an axial direction of the crankshaft 54.

As shown in FIG. 8, the substrate 150 does not overlap the rotational centers C1 and C2 when viewed in an axial direction of the crankshaft 54.

As shown in FIG. 9, the substrate 150 has the first region 154 which overlaps the motor 60 when viewed in an axial direction of the crankshaft 54.

As shown in FIG. 9, electric components 156 are located in the first region 154. The electric components 156 are switching elements for supplying the motor 60 with electric power. The electric components 156 are located on the mounting surface 152.

As shown in FIG. 9, a heat-transfer sheet 158 is located in the area of the first region 154 where the electric components 156 are located. The heat-transfer sheet 158 is located on the backside of the substrate 150 (i.e. the one of the sides of the substrate 152 disposed in a thickness direction thereof that is opposite the mounting surface 152). The heat-transfer sheet 158 has a higher thermal conductivity than the coating material on the substrate 150. The heat-transfer sheet 158 releases heat generated by the electric components 156.

As shown in FIG. 10, the heat-transfer sheet 158 is in contact with the inner surface of the second housing portion 52R. In other words, the first region 154 is located on the inner surface of the second housing portion 52R with the heat-transfer sheet 158 in between.

As shown in FIG. 10, the second housing portion 52R includes a plurality of radiator fins 160 in the area that overlaps the heat-transfer sheet 158. The radiator fins 160 are formed in the area of the outer surface of the second housing portion 52R that overlaps the heat-transfer sheet 158 when viewed in an axial direction of the crankshaft 54. Having the radiator fins 160 allows heat generated by the electric components 156 to be easily released.

As shown in FIG. 11, the substrate 150 has the second region 162 which overlaps the driven gear 104 when viewed in an axial direction of the crankshaft 54.

As shown in FIG. 11, the second region 162 includes the third region 164 which overlaps the ring magnet 132 when viewed in an axial direction of the crankshaft 54. The detecting element 134 is located at a position that overlaps the third region 164.

### [Partition]

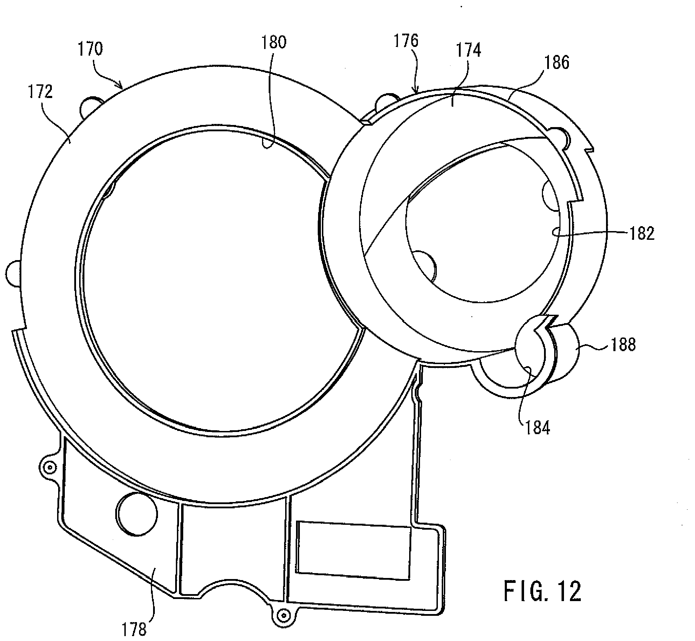

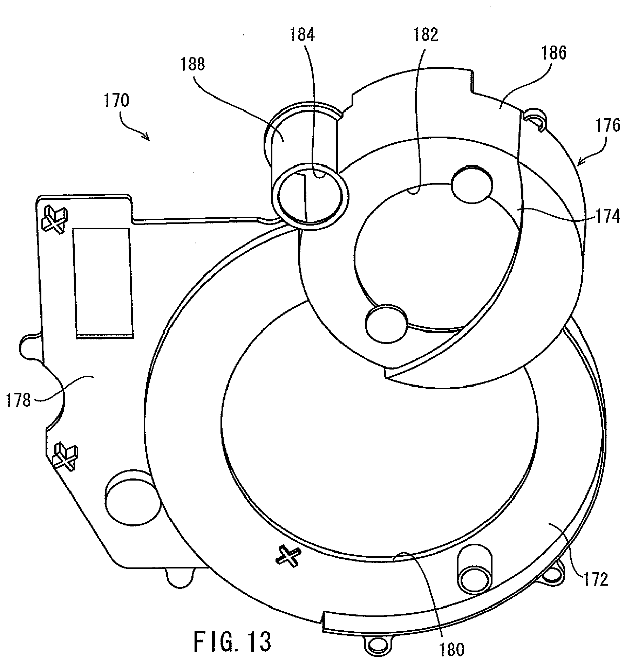

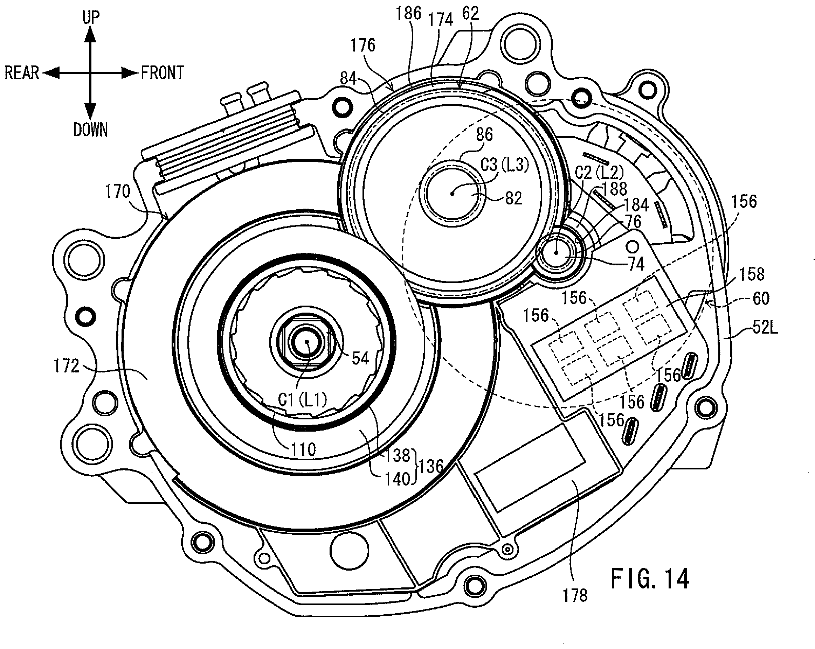

A partition 170 will be described with reference to FIGS. 2, 3, 8, 12, 13 and 14. FIGS. 12 and 13 are perspective views of the partition 170. FIG. 14 shows the driving unit with the driven gear 104 removed, as compared with FIG. 3.

As shown in FIGS. 2 and 3, the partition 170 is located within the housing 52. As shown in FIGS. 8 and 12 to 14, the partition 170 includes a first partition portion 172, a second partition portion 174, a third partition portion 176 and a fourth partition portion 178.

As shown in FIG. 14, the first partition portion 172 expands in directions perpendicular to the central axis L1 of the crankshaft 54. As shown in FIGS. 8 and 12 to 14, the first partition portion 172 has a through-hole 180 formed therein. As shown in FIG. 14, the driving member 102 is located in the through-hole 180. As is apparent from FIGS. 2, 3, 8 and 14, the first partition portion 172 is located between the substrate 150 and the driven gear 104 as measured in an axial direction of the crankshaft 54. "The first partition portion 172 is located between the substrate 150 and the driven gear 104" means that the first partition portion 172 is located between the substrate 150 and cogs of the driven gear 104 (i.e. portions of the gear that can engage the second transmission gear 86). In other words, the space defined by the substrate 150 and cogs of the driven gear 104 (i.e. portions of the gear that can engage the second transmission gear 86) is divided by the first partition portion 172.

As shown in FIGS. 3 and 8, the second partition portion 174 expands in directions perpendicular to the central axis L1 of the crankshaft 54. As shown in FIG. 3, the second partition portion 174 is located at a different position than the first partition portion 172 as measured in an axial direction of the crankshaft 54. "The second partition portion 174 is located at a different position than the first partition portion 172 as measured in an axial direction of the crankshaft 54" means that the second partition portion 174 does not overlap the first partition portion 172 when viewed in any direction perpendicular to the central axis L1 of the crankshaft.

As shown in FIGS. 8, 12 and 13, the second partition portion 174 has two through-holes 182 and 184 formed therein. The through-hole 182 is larger than the through-hole 184 when viewed in an axial direction of the crankshaft 54.

As shown in FIG. 8, the rotational center C3 is located in the through-hole 182 when viewed in an axial direction of the crankshaft 54. As is apparent from FIGS. 2 and 8, the bearing 88L is located in the through-hole 182 when viewed in an axial direction of the crankshaft 54.

As shown in FIG. 8, the output shaft 74 is located in the through-hole 184 when viewed in an axial direction of the crankshaft 54. In other words, the output shaft 74 is inserted through the through-hole 184.

As shown in FIGS. 8, 12 and 13, the third partition portion 176 is provided along the outer periphery of the second partition portion 174. The third partition portion 176 extends, in one thickness direction of the second partition portion 174, from the associated one of the sides of the second partition portion disposed in a thickness direction thereof.

As shown in FIGS. 8, 12 and 13, the third partition portion 176 includes a first peripheral wall 186 and a second peripheral wall 188. The first peripheral wall 186 is provided around the through-hole 182. The second peripheral wall 188 is provided around the through-hole 184. One of the ends of the first peripheral wall 186 disposed in a circumferential direction thereof is connected with one of the ends of the second peripheral wall 188 disposed in a circumferential direction thereof. The other one of the ends of the first peripheral wall 186 is connected with the other one of the ends of the second peripheral wall 188 disposed in a circumferential direction thereof.

As shown in FIG. 8, the first transmission gear 84, second transmission gear 86 and output gear 76 are located inside the third partition portion 176 when viewed in an axial direction of the crankshaft 54.

More specifically, the first transmission gear 84 is located inside the first peripheral wall 186. In other words, as shown in FIG. 2, the first transmission gear 84 is located at the same position as the third partition portion 176 as measured in an axial direction of the crankshaft 54. "The first transmission gear 84 is located at the same position as the third partition portion 176 as measured in an axial direction of the crankshaft 54" means that at least part of the first transmission gear 84 overlaps the third partition portion 176 when viewed in a direction perpendicular to the central axis L1 of the crankshaft 54.

The output gear 76 is located inside the second peripheral wall 188. In other words, as shown in FIG. 2, the output gear 76 is located at the same position as the third partition portion 176 as measured in an axial direction of the crankshaft 54. "The output gear 76 is located at the same position as the third partition portion 176 as measured in an axial direction of the crankshaft 54" means that at least part of the output gear 76 overlaps the third partition portion 176 when viewed in a direction perpendicular to the central axis L1 of the crankshaft 54.

As shown in FIG. 2, the second transmission gear 86 is located at a different position than the third partition portion 176 as measured in an axial direction of the crankshaft 54. "The second transmission gear 86 is located at a different position than the third partition portion 176 as measured in an axial direction of the crankshaft 54" means that the second transmission gear 86 does not overlap the third partition portion 176 when viewed in any direction perpendicular to the central axis L1 of the crankshaft 54.

As shown in FIG. 8, the substrate 150 is located outward of the second peripheral wall 188 in a direction perpendicular to the central axis L2 of the output shaft 74. In other words, the space defined by the substrate 150 and output gear 76 is divided by the second peripheral wall 188.

As shown in FIGS. 8, 12 and 13, the fourth partition portion 178 expands in directions perpendicular to the central axis L1 of the crankshaft 54. The fourth partition portion 178 is connected with the first partition portion 172.

As shown in FIG. 8, the fourth partition portion 178 overlaps the substrate 150 when viewed in an axial direction of the crankshaft 54.

In the electric assist bicycle 10, as the rider operates the pedals 36L and 36R, the crankshaft 54 rotates forward. As the crankshaft 54 rotates forward, the connecting shaft 56A rotates forward. As the connecting shaft 56A rotates forward, the driving member 102 rotates forward. As the driving member 102 rotates forward, the driven gear 104 rotates forward. If the driving member 102 rotates rearward, i.e. if the crankshaft 54 rotates rearward, the driving member 102 rotates relative to the driven gear 104. As the driven gear 104 rotates forward, the driving sprocket 58 rotates forward. The rotational force of the driving sprocket 58 is transferred to the driven sprocket 26 via the chain 32.

As the rider operates the pedals 36L and 36R, a torque is generated in the crankshaft 54. The torque generated in the crankshaft 54 is detected by the torque detection device 56B. If the torque generated in the crankshaft 54 continues to be above a predetermined reference value for a certain period of time or longer, the rotor 72 of the motor 60, i.e. the output shaft 74, rotates forward. As the output shaft 74 rotates forward, the output gear 76 rotates forward. As the output gear 76 rotates forward, the first transmission gear 84 rotates rearward. As the first transmission gear 84 rotates rearward, the second transmission gear 86 rotates rearward. As the second transmission gear 86 rotates rearward, the driven gear 104 rotates forward. As the driven gear 104 rotates forward, the attachment shaft 118 rotates forward. As the attachment shaft 118 rotates forward, the driving sprocket 58 rotates forward. As a result, the rider is assisted in pedaling.

In the electric assist bicycle 10, the rotation detection device 130 detects rotation of the crankshaft 54. This makes it possible to refer to the rotation of the crankshaft 54, in addition to the torque generated in the crankshaft 54, to monitor the pedaling by the rider. As a result, the pedaling by the rider can be monitored more accurately, making it easier to detect a failure or making it possible to assist the rider more appropriately, for example.

The electric assist bicycle 10 includes a driving unit 50. The driving unit 50 includes a housing 52, a crankshaft 54, a motor 60 and a transmission shaft 82.

The crankshaft 54 is positioned to extend through the housing 52. The motor 60 is located within the housing 52. The transmission shaft 82 is located within the housing 52 and extends parallel to a central axis L1 of the crankshaft 54.

The motor 60 includes a rotor 72, an output shaft 74 and an output gear 76. The output shaft 74 rotates together with the rotor 72 and extends parallel to the central axis L1 of the crankshaft 54. The output gear 76 is located on the output shaft 74.

The driving unit 50 further includes a first transmission gear 84, a second transmission gear 86 and a driven gear 104. The first transmission gear 84 is located on the transmission shaft 82 and engages the output gear 76, and includes more cogs than the output gear 76 does. The second transmission gear 86 is located on the transmission shaft 82. The driven gear 104 is located on the crankshaft 54 and engages the second transmission gear 86, and includes more cogs than the second transmission gear 86 does.

Out of the motor 60, first transmission gear 84 and driven gear 104, a first component 104 is a component with the largest diameter as viewed in an axial direction of the crankshaft 54, a second component 60 is a component with the second largest diameter, and a third component 84 is a component with the smallest diameter. Then, one of the first and second components 104 and 60 is the driven gear 104.

As viewed in an axial direction of the crankshaft 54, at least part of the first component 104 overlaps the second component 60. At least part of the third component 84 overlaps an area where the first and second components 104 and 60 overlap. A first line segment S1 connecting a rotational center C1 of the first component 104 with a rotational center C2 of the second component 60, a second line segment S2 connecting a rotational center C2 of the second component 60 with a rotational center C3 of the third component 84, and a third line segment S3 connecting a rotational center C3 of the third component 84 with the rotational center C1 of the first component 104 form a triangle. The first line segment S1 is longer than the second line segment S2 and longer than the third line segment S3.

In the driving unit 50 described above, the third component 84 may be positioned closer to the first and second components 104 and 60 as viewed in an axial direction of the crankshaft 54. As such, the third component 84 may overlap the first and/or second component 104 and/or 60 with a larger proportion as viewed in an axial direction of the crankshaft 54. This will reduce the size of the driving unit 50 as viewed in an axial direction of the crankshaft 54.

In the driving unit 50, the first transmission gear 84 has more cogs than the output gear 76 does. The driven gear 104 has more cogs than the second transmission gear 86 does. Thus, the size of the driving unit 50 as viewed in an axial direction of the crankshaft 54 may be reduced while ensuring a certain speed reduction ratio in the driving unit 50.

In the driving unit 50, the first component is the driven gear 104.

In the driving unit 50, at least part of the motor 60 overlaps the driven gear 104 when viewed in an axial direction of the crankshaft 54.

In the driving unit 50, at least part of the first transmission gear 84 overlaps an area 126 where the motor 60 and the driven gear 104 overlap when viewed in an axial direction of the crankshaft 54.

In the driving unit 50, the second component is the motor 60. Thus, the number of magnetic poles of the rotor 72 may be increased. This will facilitate control of fine operations of the motor 60.

In the driving unit 50, the second transmission gear 86 does not overlap the line segment S1 connecting the rotational center C1 of the first component 104 with the rotational center C2 of the second component 60 when viewed in an axial direction of the crankshaft 54.

In the driving unit 50, a rotational center C3 of the transmission shaft 82 overlaps the motor 60 when viewed in an axial direction of the crankshaft 54. Thus, the first transmission gear 84 may be positioned closer to the motor 60. As such, the first transmission gear 84 may overlap the motor 60 with a larger proportion as viewed in an axial direction of the crankshaft 54. This will reduce the size of the driving unit 50 as viewed in an axial direction of the crankshaft 54.

The driving unit 50 further includes a one-way clutch 56C. The one-way clutch 56C is located on the crankshaft 54. The one-way clutch 56C allows a rotational force that causes rotation of the crankshaft 54 in a first direction to be transferred to the driving sprocket 58 located on the crankshaft 54. The one-way clutch 56C prevents a rotational force that causes rotation of the crankshaft 54 in a second direction, opposite the first direction, from being transferred to the driving sprocket 58. The one-way clutch 56C includes the driven gear 104.

In the driving unit 50, the driven gear 104 includes an attachment shaft 118 to which the driving sprocket 58 is attached.

In the electric assist bicycle 10, the rotational center C3 of the transmission shaft 82 and a rotational center C2 of the output shaft 74 are located forward of the crankshaft 54. Thus, the portion of the driving unit 50 that is located rearward of the crankshaft 54 may have a reduced dimension in a front-to-rear direction with respect to the vehicle. As such, the distance between the crankshaft 54 and driven sprocket 26 may be reduced.

In the electric assist bicycle 10, the rotational center C3 of the transmission shaft 82 and a rotational center C2 of the output shaft 74 are located higher than the crankshaft 54. Thus, the portion of the driving unit 50 that is located lower than the crankshaft 54 may have a smaller dimension in a height direction with respect to the vehicle. As such, the minimum ground clearance of the electric assist bicycle 10 may be increased.

### [Application Examples]

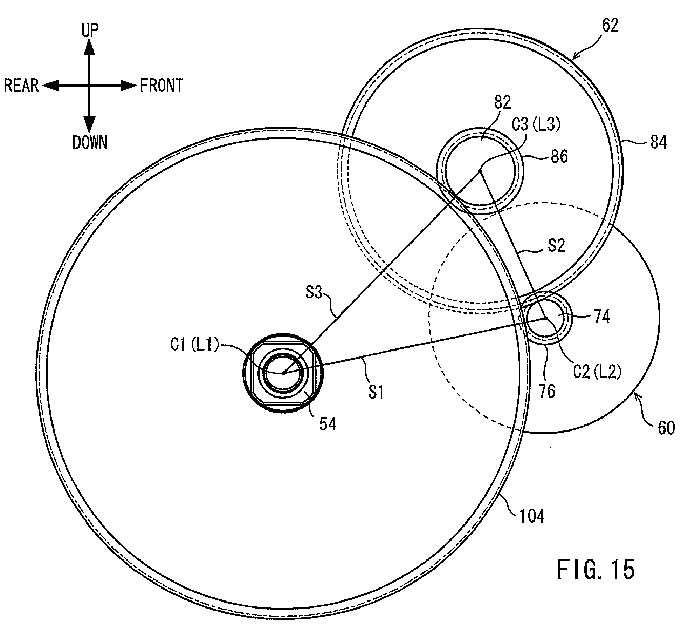

In the embodiment illustrated above, the component with the smallest diameter as viewed in an axial direction of the crankshaft 54 is the first transmission gear 84; alternatively, as shown in FIG. 15, the component with the smallest diameter as viewed in an axial direction of the crankshaft 54 may be the motor 60, for example. In this case, the line segment S3 is longer than the line segment S1 and longer than the line segment S2.

## Claims

1. A driving unit for use in an electric assist bicycle, comprising:
a housing (52);
a crankshaft (54) positioned to extend through the housing (52);
a motor (60) located within the housing (52); and
a transmission shaft (82) located within the housing (52) and extending parallel to a central axis (L1) of the crankshaft (54),
the motor (60) including:
a rotor (72);
an output shaft (74) configured to rotate together with the rotor (72) and extending parallel to the central axis (L1) of the crankshaft (54); and
an output gear (76) located on the output shaft (74),
the driving unit further comprising:
a first transmission gear (84) located on the transmission shaft (82) and configured to engage the output gear (76), the first transmission gear (84) including more cogs than the output gear (76) does;
a second transmission gear (86) located on the transmission shaft (82); and
a driven gear (104) located on the crankshaft (54) and configured to engage the second transmission gear (86), the driven gear (104) including more cogs than the second transmission gear (86) does,
wherein, if out of the motor (60), first transmission gear (84) and driven gear (104),
a first component (104) is a component with the largest diameter as viewed in an axial direction of the crankshaft (54), a second component (60) is a component with the second largest diameter, and a third component (84) is a component with the smallest diameter,
one of the first and second components is the driven gear (104),
as viewed in an axial direction of the crankshaft (54),
at least part of the first component (104) overlaps the second component (60),
at least part of the third component (84) overlaps an area where the first and second components (104,30) overlap,
a first line segment (S1) connecting a rotational center (C1) of the first component (104) with a rotational center (C2) of the second component (60), a second line segment (S2) connecting the rotational center (C2) of the second component (60) with a rotational center (C3) of the third component (84), and a third line segment (S3) connecting the rotational center (C3) of the third component (84) with the rotational center (C1) of the first component (104) form a triangle, and
the first line segment (S1) is longer than the second line segment (S2) and longer than the third line segment (S3).

2. A driving unit according to claim 1, wherein the first component is the driven gear (104).

3. A driving unit according to claim 1 or 2, wherein at least part of the motor (60) overlaps the driven gear (104) when viewed in an axial direction of the crankshaft (54).

4. A driving unit according to claim 3, wherein at least part of the first transmission gear (84) overlaps an area where the motor (60) and the driven gear (104) overlap when viewed in an axial direction of the crankshaft (54).

5. A driving unit according to claim 1 or 2, wherein the second component is the motor (60).

6. A driving unit according to claim 5, wherein the second transmission gear (86) does not overlap the first line segment (S1) when viewed in an axial direction of the crankshaft (54).

7. A driving unit according to claim 5 or 6, wherein a rotational center (C3) of the transmission shaft (82) overlaps the motor (60) when viewed in an axial direction of the crankshaft (54).

8. A driving unit according to any one of claims 1 to 7, wherein the third component is the transmission shaft (82).

9. A driving unit according to any one of claims 1 to 8, further comprising a one-way clutch (56C) located on the crankshaft (54) and configured to allow a rotational force that causes rotation of the crankshaft (54) in a first direction to be transferred to the driving sprocket (58) located on the crankshaft (54) and prevent a rotational force that causes rotation of the crankshaft (54) in a second direction, opposite the first direction, from being transferred to the driving sprocket (58),
wherein the one way-clutch (56C) includes the driven gear (104).

10. A driving unit according to claim 9, wherein the driven gear (104) includes an attachment shaft (118) to which the driving sprocket (58) is attached.

11. An electric assist bicycle including the driving unit according to any one of claims 1 to 10.

12. A electric assist bicycle according to claim 11, wherein the rotational center (C3) of the transmission shaft (82) and a rotational center (C2) of the output shaft (74) are located forward of the crankshaft (54).

13. A electric assist bicycle according to claim 11 or 12, wherein the rotational center (C3) of the transmission shaft (82) and a rotational center (C2) of the output shaft (74) are located higher than the crankshaft (54).
